# EUROPEAN PATENT APPLICATION

(11) **EP 3 098 263 A1**
(43) Date of publication of application: **30.11.2016**
(21) Application number: 16172009.9
(22) Date of filing: 30.05.2016
(51) Int. Cl.: C08L 23/10, A43B 17/00

(54) **COMPOSITE MATERIAL, OBTAINING METHOD AND USE THEREOF**

(30) Priority: 29.05.2015 PT 2015108516
(71) Applicant: ATLANTA - Componentes Para Calçado, Lda., 4615-909 Lixa (PT)
(72) Inventor: Pereira Meireles da Cunha, Alexandre Alberto, 4615-421 Lixa (PT); de Pinho Rodrigues, José Luís, 3730-074 Vale de Cambra (PT); Pinto Ferreira, Maria José, 4520-707 Santa Maria da Feira (PT); Coelho, Carlos Fernandes, 4730-281 Vila Verde (PT)
(74) Representative: Ferreira, Maria Silvina

(57) **Abstract**

The present application relates to a composite material, obtaining method and use thereof.

The main advantage of this composite material is the ability to be completely processable once it is injected, given its superior physical and mechanical characteristics particularly in nail holding capacity, lower water absorption, good resistance to impact and fatigue, good internal cohesion of the material, pigmentation ability, good ability to be prepared before adhesive application, coating and painting.

From a practical point of view, the herein disclosed composite material allows, for example, the replacement in the market of footwear parts, such as footwear heels, wedges, high heels, planks, platforms, and covers.

## Description

### Technical domain

The present application relates to a composite material, obtaining method and use thereof.

### Background

The existence of composite materials with wood particles or fibers embedded in polymer matrices, such as polyethylene, polypropylene, polyvinylchloride - PVC, acrylonitrile butadiene styrene - ABS, among others is known in the art, for use in construction mainly in the replacement of wooden materials [1]. These materials are also being used in furniture and automobile fields and when there is a need for thermal insulation. The development and production of these composite materials has also increased due to the need to not only recycle plastic materials, which have a significant and banal use in many different fields and applications, but also to eliminate and add value to waste generated by various industries for its use in the development of new materials, and also to reduce the consumption and use of natural resources that are increasingly scarce. Using wood particles/fibers is an interesting option for the production of composite materials since they are nontoxic, are recyclable, have low density, an acceptable production price and are obtained from renewable sources [2].

In 2004, the US Environmental Protection Agency has discontinued the use of wood products with treatment against environmental and microbial degradation in construction. The composite materials with a large percentage of wood were one of the solutions found for replacing these materials. These materials consist of dispersing of about 50% by mass of wood particles in polyethylene, polystyrene, PVC or ABS matrices. The high amount of wood allows these materials to resemble natural wood and the processing of these materials by extrusion is also faster and more cost-effective [3]. The use of wood particles/fibers also provides advantages in addition in terms of biodegradability of the final products, which is another positive aspect from an environmental point of view.

The development and use of composite materials requires that they resemble as closely as possible those materials intended to be replaced, in terms of visual appearance, feel and physical properties. In this sense, a considerable amount of wood fibers or particles must be integrated, which complicates processing thereof and reduces their physical strength due to compatibility problems between wood, which has a hydrophilic behavior, and the hydrophobic polymer [1].

Several studies and developments have been conducted for fiber surface modification in order to enhance/promote the compatibility thereof with the polymeric matrix. However, since the solutions studied depend on the nature and amount of fibers and polymers as well as on the objectives meant to be achieved, there are no universal solutions and no solution has yet been found to accomplish the intended application in the present project. Some solutions available in the art and which may be seen as the starting point for obtaining the new material herein disclosed are hereinafter presented.

Polyolefins have been used for the modification of wood fibers [2]. Marquès et al. have conducted a comparative study on the use of different maleic anhydride-based compatibilizing agents in the preparation of composite materials with cellulose using an extruder [2]. Results have indicated that the use of a compatibilizing agent, regardless of its properties, improves the mechanical properties of the composite material and these same properties can be altered and tailored to the end use through the use of compatibilizing agents with different molecular masses.

Bengtsson and Oksman have studied the crosslinking process of composites using silane and have assessed their mechanical properties [4]. In order to compare the adhesion between wood and polyethylene, with and without silane crosslinking, scanning electron microscopy images (SEM) of a fracture surface were obtained. In the images obtained for the composites with no crosslinking there is the presence of gaps between wood and polymer. The same is not true when the composite is crosslinked with silane. Results indicate that crosslinking promotes good interfacial adhesion between the wood and the polymer.

K.A. Afrifahm et al. have studied the feasibility of using polybutene as a ductile polymer matrix for plastic composites with wood [5]. The authors state that it can be easily produced by extrusion and injection. The incorporation wood particles in quantities of 30-50% by mass was studied, and significant differences in flexural strength have not been found, but a decrease in tensile strength values with increasing amount of wood due to weak bonding between the wood fibers and polymer was observed.

The work by Yeh et al. consisted in preparing composites with a wood content percentage up to 50% by mass using virgin ABS and recycled ABS for comparing structure and properties [6]. The results indicated that the use of recycled ABS contains various impurities and poor and variable mechanical properties compared to virgin ABS. Moreover, results also show that when a certain quantity of wood powder is added, mechanical properties of the mixture depend mainly on the amount of wood rather than on rheological properties of the polymer matrix. For wood powder quantities of about 50% by mass no significant changes between the use of virgin ABS and recycled ABS are observed.

The use of wood composite materials has advantages over wooden materials because these have purposeful higher deterioration strength and greater dimensional stability due to the incorporation of polymer material [7]. Fabiyi et al. have conducted a study to determine the effect of wood properties in degradation strength and durability of plastic composites with wood [7]. Results obtained have shown that the species of the wood influences thermal stability, and differences in the concentration of carboxylic acids and esters in composites with different wood species have been observed. In general, the results indicate that the selection of the appropriate wood species is important for the performance of the composite material [7]. In another work Fabiyi et al. studied the moisture strength and durability of composites containing wood species with varying degrees of degradation strength using the Fourier Transform Infrared Spectroscopy (FTIR) analisys technique [8]. Studies once again revealed that the wood species influences the properties of the composite material [8].

In short, it appears that the performance and properties of these composites depend on the materials used and interaction thereof. Usually, the wood used for the production of such composite materials is in the form of particles or fibers of small dimensions. Extruded wooden plastic composites generally comprise about 50-60% wood particles. When these composites are injected, this percentage is much lower to avoid high viscosity values hindering the injection process. The polymer matrix is also important for the production of these composite materials. The polymers most widely used in production are polyethylene, polypropylene and PVC, with gradients and specific compositions for each application, since they have appropriate physical properties, reasonable costs and can be processed at temperatures below 200 °C to avoid significant degradation of the wood. During the extrusion and injection process, the residence time in the spindle is also important and it must be studied to target the specific application [9].

In conclusion, despite there being several types of wood composites, mainly extruded composites having properties that focus their application in construction and car parts currently stand out.

In addition to key features studied, such as compressive strength, climatic aging strength, such as UV radiation, water, salt, etc., and wear/abrasion strength, composites for use in footwear must also have complementary features not focused in available studies particularly side impact strength, high internal cohesion in order to be applied in footwear, nail holding ability, shock damping ability, among others.

### Summary

The present application describes a composite material for use in footwear comprising the following elements in mass percentage:
- 30% to 99% thermoplastic material;
- 1% to 70% lignocellulosic fibers;
- 1% to 20% additives.

In one embodiment, the lignocellulosic fibers of the composite material for use in footwear have a thickness between 0.01 and 2 millimeters.

In another embodiment, the lignocellulosic fibers of the composite material for use in footwear are prepared in micronized wood flour, wood powder, wood fiber or vegetable fibers.

In yet another embodiment, the additives of the composite material for use in footwear are pigmenting agents, lubricating agents, lubricating and demolding waxes or compatibilizing agents.

The present application further describes footwear comprising the composite material described above.

The present application further describes the high heel comprising the composite material described above.

The present application further describes a method for obtaining the composite material for use in footwear comprising the following steps:
- composition of the raw material;
- extrusion;
- injection.

In one embodiment, the raw material composition step of the obtaining method comprises the following sub-steps:
- weighing additives, thermoplastic and lignocellulosic fibers;
- physical mixing all elements in an intensive mixer at room temperature until it becomes homogeneous.

In another embodiment, the extrusion step of the obtaining method comprises the following sub-steps:
- in the extrusion process, the mixture obtained in the raw-material composition step is applied with the application of optimal operating parameters in the extruder to yield a molten homogeneous compound;
- then cooling the melt is undertaken by submerging in water at room temperature, wherein in the same extrusion line it is introduced in a cutting system, which will transform the melt into granules, for subsequent application in the extrusion process;
- extrusion process.

In yet another embodiment, the extrusion step of the obtaining method is performed at temperatures between 140 °C and 210 °C and pressures of 1 to 3 MPa.

In one embodiment, the molten homogeneous compound obtained in the steps of the obtaining method is obtained as a wire.

In another embodiment, the injection step of the obtaining method comprises the following sub-steps:
- the granular material is dehumidified at temperatures between 40% and 80%;
- preparing the injection machine;
- mounting the mold and introducing the operating parameters;
- placing the injection machine in automatic mode, if the machine has such feature.

In yet another embodiment, the injection step of the obtaining method is performed at temperatures between 140 °C and 180 °C and pressures of 0.40 to 10.00 MPa.

The present application also describes the use of the composite material in footwear heels, wedges, high heels, planks, platforms and covers.

### General Description

The present application relates to a composite material, obtaining method and use thereof.

The composite material herein disclosed comprises a thermoplastic, such as polypropylene, polyethylene and polystyrene, in mass percentage between 30% and 99%, lignocellulosic fibers with thicknesses between 0.01 and 2 millimeters, in mass percentage between 1% and 70%, and additives in mass percentages between 1% and 20%.

The thermoplastic material, in embodiments with lower physical requirements, less complex geometries or with application in critical areas with thicknesses equal or greater than 4 mm may be present in the composite material with a mass percentage between 30% and 60%. The thermoplastic material, in embodiments with greater physical requirements, more complex geometries or with application in critical areas with thicknesses equal or inferior than 4 mm may be present in the composite material with a mass percentage between 61% and 99%.

The lignocellulosic fibers, in embodiments with lower physical requirements, less complex geometries or with application in critical areas with thicknesses equal or greater than 4 mm may be present in the composite material with a mass percentage between 40% and 70%. The lignocellulosic fiber, in embodiments with greater physical requirements, more complex geometries or with application in critical areas with thicknesses equal or inferior than 4 mm may be present in the composite material with a mass percentage between 1% and 39%.

The lignocellulosic fibers used can be prepared in micronized wood flour, wood powder or wood fiber, wherein the wood used can be, for example, eucalyptus, pine, chestnut, beech trees, among others. Vegetable fibers such as almond shells, peanut shells, rice husk, hemp, coconut husk, walnut shells and hazelnut shells may also be used, among others.

As additives pigmenting agents, lubricating agents, lubricating and demolding waxes, compatibilizing agents may be used, among others.

Additives, in embodiments where the aim is to present some pigment, may be present in the composite material with a mass percentage between 0.5% and 5%. In the case of products naturally injected into the composite the addition of a pigmenting additive may not occur.

The composite material is obtained by a method comprising the following steps:
- composition of the raw material;
- extrusion;
- injection.

The main advantage of this composite material is the ability to be totally processable once injected, its superior physical and mechanical characteristics particularly in nail holding capacity, lower water absorption, good resistance to impact and fatigue, good internal cohesion of the material, pigmentation ability, good ability to be prepared before adhesive application, coating and painting.

Thus it is possible to obtain a product that meets the standards of the Regulatory Framework of Chemicals Management (REACH) issued by the European Chemicals Agency on December 18, 2006, with resistance to side impact, fatigue resistance, nail retention, applied bolts, water absorption, adhesion of surface coatings, decorative paints.

From a practical point of view, the herein disclosed composite material allows, for example, the replacement in the market of footwear parts, such as footwear heels, wedges, high heels, planks, platforms, and covers.

### Description of the embodiments

Hereinafter, some embodiments shall now be described in more detail, which are not however intended to limit the scope of the present application.

The composite material herein disclosed comprises a thermoplastic, such as polypropylene, polyethylene and polystyrene, in mass percentage between 30% and 99%, lignocellulosic fibers with thicknesses between 0.01 and 2 millimeters, in mass percentage between 1% and 70%, and additives in mass percentages between 1% and 20%.

The lignocellulosic fibers used can be prepared in micronized wood flour, wood powder or wood fiber, wherein the wood used can be, for example, eucalyptus, pine, chestnut, beech trees, among others. Vegetable fibers such as almond shells, peanut shells, rice husk, hemp, coconut husk, walnut shells and hazelnut shells may also be used, among others.

As additives, pigmenting agents, lubricating agents, lubricating and demolding waxes, compatibilizing agents may be used, among others.

The composite material is obtained by a method comprising the following steps:
- composition of the raw material;
- extrusion;
- injection.

The raw material composition step comprises the following sub-steps:
- weighing additives, thermoplastic and lignocellulosic fibers;
- physical mixing all elements in an intensive mixer at room temperature until it becomes homogeneous.

Throughout the present patent application, room temperature is understood as the temperature which is common to one skilled in the art, at which a person is accustomed to work comfortably and which can vary approximately between 15 to 30 °C, preferably from 20 to 25 °C, more preferably between 21 to 23 °C, however without restricting it to temperatures above or below those limits, and provided that the temperature is acceptable and recognized as room temperature, i.e. inside the facilities.

The extrusion step comprises the following sub-steps:
- in the extrusion process, the mixture obtained in the raw-material composition step is applied with the application of optimal operating parameters in the extruder to yield a molten homogeneous compound, for example as a wire;
- then, cooling the melt is undertaken by submerging in water at room temperature, wherein in the same extrusion line it is introduced in a cutting system, which will transform the melt into granules, for subsequent application in the injection process;
- extrusion process.

The extrusion process may be performed at temperatures between 140 °C and 210 °C and pressures of 1 to 3 MPa. If one considers that the melt granules have a cylindrical shape, one may assume a height between 2 and 4 mm and a diameter between 2 and 4 mm. On the other hand, if one considers that the melt granules have a spherical shape, one may assume a diameter between 2 and 4 mm.

The injection step comprises the following sub-steps:
- the granular material is dehumidified, e.g. in an oven designed for the purpose, at temperatures between 40% and 80%;
- preparing the injection machine;
- mounting the mold and introducing the operating parameters;
- placing the injection machine in automatic mode, if the machine has such option.

The injection process may be performed at temperatures between 140 °C and 180 °C and pressures of 0.40 to 10.00 MPa.

As far as additives are concerned, at least one lubricant is always applied. The compatibilizing agent is in turn optional and its introduction shall depend on the type and mechanical requirements of the product being produced.

### Application Examples

The composite material can be used in footwear wedges or high heels.

### Sample material obtained

For the preparation of the test material described in the preceding paragraph, one must resort to the composition shown in the following table:

**Table 1 - Composition elements and amounts of composite material (Example 1)**

| **Elements** | **Material Kg** |
|---|---|
| Polypropylene | 37.5 Kg |
| Wood fibers | 11 Kg |
| Lubricating agent | 1.5 Kg |

The results of laboratory tests of the composite material of this example are listed in Table 2.

**Table 2 - Physical and mechanical properties determined in laboratory concerning the composition of the composite material (Table 1).**

| **Material** | **Tearing of the High Heel (ISO 22650)** | **Separation of High Heel Cover (CTCP 1-33)** | **Tearing of the Cover (ISO 19958)** | **Veslic Friction (ISO 17700)** |
|---|---|---|---|---|
| Sole 1 | 664 | 1.1 | - | 4/5 |
| Sole 2 | 1535 | - | 286 | 4/5 |
| Sole 3 | 740 | 1.0 | - | 3/4 |
| Sole 4 | 1838 | - | 476 | 4/5 |
| Sole 5 | 1333 | 2.9 | - | 3 |

As can be seen all soles tested with the composite material show results above the minimum specifications and/or above the values set in each of the specified standards.

A complete set of application and finishing tests with prototypes was also undertaken. For these tests the following prefabricated soles were prepared:
1) arrangement with track and cover in thermoplastic polyurethane and high heel coupled with nails and a plastic adhesive on both shoes (Ref.1);
2) arrangement with track and cover in styrene butadiene rubber, high heel coupled with nails and adhesive, one shoe with plastic adhesive (Ref.2) and the other with close-contact adhesive (ref.3);
3) arrangement with track and cover in styrene butadiene rubber developed by Goodyear under the tradename Neolite, high heel coupled with nails and adhesive, one shoe with a plastic adhesive (ref.4) and the other with close-contact adhesive (Ref.5);
4) arrangement with track and cover in leather, high heel coupled with nails and adhesive, one shoe with plastic adhesive (ref.6) and the other with close-contact adhesive (ref.7);
5) arrangement with track and cover in thermally rearranged polymer, high heel coupled with nails and adhesive, one shoe with a plastic adhesive (Ref.8) and the other with close-contact adhesive (ref.9).

Subsequently, the assessment of the pre-fabricated properties in terms of heel clamping strength at break (minimum 500N) was undertaken, under the designation test 1, as well as the heel stiffness at a 200N deformation (maximum 20 mm), under the designation test 2, and at a permanent 400 N deformation (maximum 15%), under the designation test 3. The results are shown in table 3.

**Table 3 - Mechanical properties determined in laboratory.**

| **Material** | **Test** | **Tearing of High Heel (ISO 22650) Right Shoe** | **Tearing of High Heel (ISO 22650) Left Shoe** |
|---|---|---|---|
| Ref.1 | 1 | 651 | 691 |
| | 2 | 5 | 8 |
| | 3 | 14 | 4 |
| Ref.2 | 1 | - | 399 |
| | 2 | - | 7 |
| | 3 | - | - |
| Ref. 3 | 1 | 394 | - |
| | 2 | 6 | - |
| | 3 | - | - |
| Ref.4 | 1 | - | 430 |
| | 2 | - | 11 |
| | 3 | - | 32 |
| Re f . 5 | 1 | 521 | - |
| | 2 | 5 | - |
| | 3 | 19 | - |
| Ref.6 | 1 | - | 795 |
| | 2 | - | 2 |
| | 3 | - | 14 |
| Ref.7 | 1 | 1087 | - |
| | 2 | 4 | |
| | 3 | 11 | - |
| Ref.8 | 1 | - | 302 |
| | 2 | - | 9 |
| | 3 | - | - |
| Ref.9 | 1 | 163 | - |
| | 2 | 22 | - |
| | 3 | - | - |

Regarding the type of separation, in the case of Ref. 1 test, the nails held in the sole were pulled out and the nails held in the high heel were not pulled out. In the case of Refs. 2 and 3, nails held in the high heel were pierced and tore the sole material. In the case of Ref. 4, nails held on both the sole and high heel pierced the sole. In the case of Ref. 5, nails held in the high heel pierced the sole. In the case of Ref. 6, nails remained held on the sole. In the case of Ref. 8, nails held in the high heel pierced the sole. It can thus be seen that the capacity of the new high heels in fixing/retaining nails is quite high because specifications are achieved where the sole material retains the nails, that is, the sole is not torn by the nails.

### References

[1] - S.-H. S. Agarwal, R. K. Gupta, Composites Science and Technology 69 (2009) 2225-2230.
[2] - E.F-Marques, J.A. Méndez, M.A. Pèlach, F. Vilaseca, J. Bayer, P. Mutjé, Chemical Engineering Journal (2011) 1170-1178
[3] - S.-K. Yeh, R. K. Gupta, Composite: Part A 39 (2008) 1694-1699.
[4] - M. Bengtsson, K. Oksman, Polymer Composite (2006) 184-194.
[5] - K.A. Afrifahm, R.A. Hickock, L.M. Matuana, Composites Science and Technology 70 (167-172).
[6] - S.-K. Yeh, A. Agarwal, R.K. Gupta, Composite Science and Technology 69 (2009) 2225-2230.
[7] - J.S. Fabiyi, A.G. MacDonald, Composite: Part A 41 (2010) 1434-1440.
[8] - J.S. Fayibi, A.G. McDonald, J.J Morrell, C. Freitag, Composites: Part A 42 (2011) 501-510.
[9] - D.F. Caufield, C. Clemons, R.M. Rowell. Wood Themoplastic Composites In: R.M. Rowell, F. Caldeira, J.K. Rowell, Sustainable Development in Forest Products Industry. Porto. Edições Universidade Fernando Pessoa, 2010, 6, 141-161.

The present technology is of course in no way restricted to the embodiments herein described and a person of ordinary skill in the art will be capable of providing many modification possibilities thereto without departing from the general idea of the invention as defined in the claims.

All embodiments described above are obviously combinable with each other. The following claims further define preferred embodiments.

## Claims

1. Composite material for use in footwear comprising the following elements in mass percentage:
- 30% to 99% thermoplastic material;
- 1% to 70% lignocellulosic fibers with a thickness between 0.01 and 2 mm;
- 1% to 20% additives.

2. Composite material for use in footwear according to any of the preceding claims, wherein the lignocellulosic fibers are prepared in micronized wood flour, wood powder, wood fiber or vegetable fiber.

3. Composite material for use in footwear according to any of the preceding claims, wherein the additives are pigmenting agents, lubricating agents, lubricating and demolding waxes or compatibilizing agents.

4. Footwear comprising the composite material described in any claim 1 to 3.

5. High heel comprising the composite material described in any claim 1 to 3.

6. Method for obtaining composite material for use in footwear according to any claim 1 to 3, comprising the following steps:
- composition of the raw material;
- extrusion;
- injection.

7. Obtaining method according to the preceding claim, wherein the composition of raw material step comprises the following sub-steps:
- weighing additives, thermoplastic and lignocellulosic fibers;
- physical mixing all elements in an intensive mixer at room temperature until it becomes homogeneous.

8. Obtaining method according to claim 6, wherein the extrusion step comprises the following sub-steps:
- in the extrusion process, the mixture obtained in the raw-material composition step is applied with the application of optimal operating parameters in the extruder to yield a molten homogeneous compound;
- then cooling the melt is undertaken by submerging in water at room temperature, wherein in the same extrusion line it is introduced in a cutting system, which will transform the melt into granules, for subsequent application in the extrusion process;
- extrusion process.

9. Obtaining method according to any claims 6 to 8, wherein the extrusion step is carried out at temperatures between 140 °C and 210 °C and at pressures between 1 and 3 MPa.

10. Obtaining method according to claim 8, wherein the molten homogeneous compound is obtained as a wire.

11. Obtaining method according to claim 6, wherein the injection step comprises the following sub-steps:
- the granular material is dehumidified at temperatures between 40% and 80%;
- preparing the injection machine;
- mounting the mold and introducing the operating parameters;
- placing the injection machine in automatic mode, if the machine has such option.

12. Obtaining method according to any claims 6 to 11, **characterized in that** the injection step is performed at temperatures between 140 °C and 180 °C and pressures between 0.40 and 10.00 MPa.

13. Use of the composite material described in any claims 1 to 3, **characterized in that** it is used in footwear heels, wedges, high heels, planks, platforms and covers.
